# EUROPEAN PATENT SPECIFICATION

(11) **EP 0 941 426 B1**
(45) Date of publication and mention of the grant of the patent: **01.06.2005**
(21) Application number: 97950631.8
(22) Date of filing: 26.11.1997
(51) Int. Cl.: F16F 9/10, C10M 105/38, F16F 9/00

(54) **SHOCK ABSORBER CONTAINING BIODEGRADABLE FLUID**
STOSSDÄMPFER MIT BIOLOGISCH ABSETZBARER FLÜSSIGKEIT
AMORTISSEUR CONTENANT UN FLUIDE BIODEGRADABLE

(30) Priority: 04.12.1996 US 760055
(43) Date of publication of application: 15.09.1999
(73) Proprietor: Cognis Corporation, Ambler, PA 19002 (US)
(72) Inventor: ZEHLER, Eugene, R., West Chester, OH 45069 (US)
(74) Representative: Fabry, Bernd, Dr.
(86) International application number: PCT/US1997/021096
(87) International publication number: WO 1998/027359

(56) References cited:
- EP-A- 0 652 280
- DE-A- 2 549 672
- US-A- 2 630 193
- US-A- 3 694 382
- US-A- 4 144 183
- US-A- 4 175 045
- US-A- 5 378 249

## Description

### BACKGROUND OF THE INVENTION

### 1. Field of the Invention

The present invention relates to a shock absorber containing one or more biodegradable esters as the dampening fluid.

### 2. Description of the Related Art

Vehicles, machinery and other types of equipment are normally equipped with hydraulic systems which convert vibrational energy into heat and thus have a dampening effect. Such dampeners are most frequently used in vehicles (wheel and steering dampeners) and are usually known as shock absorbers. US-A 2 630 193 discloses a shock absorber and details of its build up. The function of the hydraulic fluid, also known as a dampening fluid, is the same in all design variants (single or twin-tube absorbers); the requirements differ mostly with respect to wear protection and viscosity or viscosity-temperature characteristics. In operation, the forced flow of the oil through narrow channels from the loaded chamber to the compensating chamber raises the oil temperature to 60 - 100°C, depending on the load (in special cases up to 150°C); this heat is removed by the air stream of the moving vehicle. On the other hand, the dampeners must remain operational also at low ambient temperatures; this requires low-viscosity oils with good cold properties.

Historically, dampening fluids have been based on mineral oil or low molecular weight poly-α-olefins (PAO). Both types of fluids contain high levels of polymer to boost Viscosity Index (VI) to about 250 because high VI fluids offer more consistent dampening characteristics over their typical operating temperature range of -40 to +80°C. Because the typical mineral oil- and PAO- based fluids contain polymeric VI improvers which degrade as a result of exposure to the mechanical shearing stresses inside the shock absorber, the viscosity of these fluids decreases over time.

Even though shock absorber manufacturers recommend that the fluids be drained and recycled, such guidelines are not always strictly followed. Consequently, shock absorber fluids leak out and get into the environment and present health and safety hazards. Thus, there is a need for shock absorbers that contain biodegradable fluids that, if introduced into the environment, would have little or no deleterious effects because they are biodegradable.

### SUMMARY OF THE INVENTION

Shock absorbers according to the invention are comprised of: a cylinder defining a chamber therein, the cylinder containing a fluid; a piston rod sealingly projecting into the cylinder and being axially displaceable with respect to the cylinder; a piston being attached to the piston rod, the piston being slidably disposed within the cylinder to sealingly divide the cylinder into first and second chambers; means for permitting fluid communication between the first and second chambers; the means for permitting fluid communication being disposed in at least a portion of the piston. The fluid is comprised of one or more polyol esters the polyol component of which is a hindered polyol and the carboxylic acid component is a mono-carboxylic acid having from about 5 to about 18 carbon atoms. Since the shock absorber fluid according to the invention does not contain any polymeric viscosity index improver, the viscosity of the fluid does not degrade as a result of exposure to the mechanical shearing stresses inside the shock absorber.

### BRIEF DESCRIPTION OF THE DRAWINGS

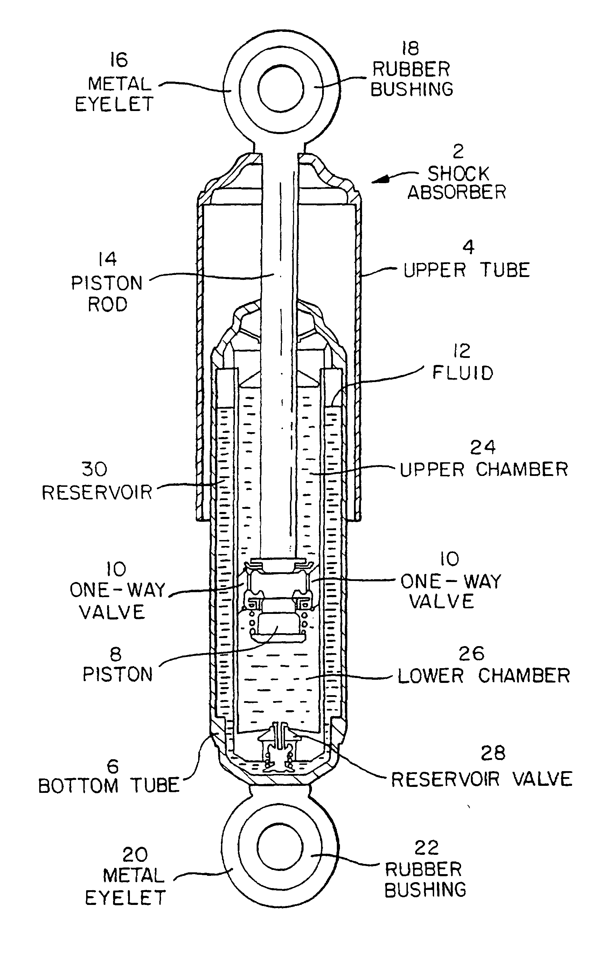

Figure 1 is a longitudinal view of a shock absorber.

### DESCRIPTION OF THE PREFERRED EMBODIMENTS

The dampening fluids according to the invention are comprised of one or more polyol esters, the polyol component of which is a hindered polyol and the carboxylic acid component is a mono-carboxylic acid having from about 5 to about 18 carbon atoms. A hindered polyol is a molecule having no beta hydrogen atoms and 2 or more alcohol functionalities. A beta hydrogen atom is a hydrogen atom bonded to a carbon atom which is adjacent to a carbon atom bonded to a functional group such as an OH group. In the case of a polyol, a beta hydrogen is a hydrogen atom bonded to a carbon atom which is adjacent to a carbon atom bonded to an alcohol functionality. An example of a polyol having two beta hydrogen atoms is 1,3-propanediol. Trimethylolpropane, on the other hand, is an example of a hindered polyol having no beta hydrogen atoms and 3 alcohol functionalities. Examples of hindered polyols include, but are not limited to, trimethylolpropane, pentaerythritol, dipentaerythritol, neo-pentyl glycol and the like.

The carboxylic acid components of the polyol esters according to the invention are aliphatic carboxylic acids having from 5 to 18 carbon atoms. Thus, the polyol esters suitable for use in the shock absorbers according to the invention are hindered polyol esters of C₅₋₁₈ carboxylic acids. The C₅₋₁₈ carboxylic acids can be linear or branched and are preferably linear. The esters according to the invention can be made by the method described in U.S. patent 5,021,179. The final formulated shock absorber fluid will contain individual hindered polyol esters of C₅₋₁₈ carboxylic acids or combinations of 2 or more of such esters and will also typically contain antioxidants, corrosion inhibitors, antiwear additives and seal conditioners.

The biodegradability of the shock absorber fluids according to the invention is determined by the Co-ordinating European Counsel standard test method L-33-A-94 (Primary biodegradation Test, abbreviated C.E.C L-33-A-94). In order to be considered biodegradable, a fluid must be at least 80% biodegradable. An acceptable biodegradable shock absorber fluid should exhibit at least the following properties:

| | |
|---|---|
| Viscosity at -40°C | 250-5,000 cs |
| Viscosity at 40°C | 10-15 cs |
| Viscosity at 100°C | 2.5-4.0 cs |
| Viscosity index | 90-300 |
| Pour Point | -50°C |
| Flash Point | 100°C (min) |
| Rust Test (ASTM D-665A) | Pass |
| Four Ball Wear¹ | 0.30-0.35 mm |
| Foam Test (ASTM D-892) | <50 ml |
| Biodegradability (C.E.C L-33-A-94) | ≥80% |
| 1-20 kg, 1800 RPM, 54°C, 1 hr. | |

A typical shock absorber is depicted in Figure 1. The shock absorber 2 includes an upper tube 4 partially surrounding and concentric with a bottom tube 6, a piston 8 centrally located along the longitudinal axis of the bottom tube 6, whereby the bottom tube 8 is free to move partially further into and out of the upper tube 4 in a telescoping manner slidably past the piston 8, one-way valves 10 are located between the piston 8 and the inside wall of bottom tube 6 while assisting in maintaining a fluid seal therebetween, and hydraulic fluid 12 substantially fills bottom tube 6. The piston 8 includes calibrated orifices, and is rigidly connected to one end of a piston rod 14. The other end of piston rod 14 is rigidly connected to, or formed into, a metal eyelet 16 retaining a rubber bushing 18 for bolting the upper tube 4 to an associated automobile frame, the piston rod 14 and upper tube 4 being rigidly connected together near the metal eyelet 16. The bottom tube 6 is rigidly connected at its lower end to a metal eyelet 20 containing a bushing 22 of elastomeric material, for bolting the bottom tube 6 to a suspension component. A tight fit is maintained between the piston 8 and the inside walls of bottom tube 6, dividing the latter into an upper chamber 24 and a lower chamber 26. A two-way reservoir valve 28 provides for a reservoir chamber 30 containing extra hydraulic fluid 12 to deliver fluid 12 to or receive fluid 12 from the lower chamber 26 for movement of the bottom tube 6 away from or into the upper tube 4, respectively.

The operation of the shock absorber 2 is well known. When an associated tire hits a bump, the lower or bottom tube 6 telescopes into the upper tube 4, causing the piston 8 to penetrate further into the bottom tube 6. On rebound of an associated tire or wheel, the opposite movement occurs, with the bottom tube 6 moving downward and telescoping partially out of the upper tube 4. During such movement between the upper tube 4 and bottom tube 6, the valves 10 and 28 permit hydraulic fluid 12 to move in an appropriate direction between upper chamber 24, lower chamber 26, and reservoir 30, for in combination with piston 8 dampening the telescopic movement therebetween.

The following examples are meant to illustrate but not to limit the invention.

### EXAMPLE 1

A shock absorber fluid, which contained the following ingredients in parts by weight, was found to possess properties listed in Table 1 comparable to a commercially available mineral oil based product.

| | |
|---|---|
| EMERY® 2930¹ | 98.83 |
| VANLUBE® 81² | 0.50 |
| PANA | 0.50 |
| QUINIZARIN | 0.02 |
| IRGALUBE® 349³ | 0.15 |

| | |
|---|---|
| 1- an ester of trimethylolpropane and EMERY® 1210 acids which is a mixture of monocarboxylic acids composed of 4% valeric acid, 27% caproic acid, 30% enanthic acid, 12% caprylic acid, 27% pelargonic acid. | |
| 2- trademark product of R.T. Vanderbilt | |
| 3- trademark product of Ciba-Geigy | |

**TABLE 1**

| | Commercial Product¹ | Examgle 1 |
|---|---|---|
| Viscosity, 100°C, cs | 4.72 | 3.70 |
| Viscosity, 40°C, cs | 15.48 | 15.69 |
| Viscosity, -40°C, cs | no flow | 2984 |
| Viscosity, BF^{a}, -25°C, cp | 646 | 679 |
| Viscosity, BF^{a}, -40°C, cp | 3161 | 3229 |
| Viscosity, BF^{b}, -40°C, cycled, cp | 7392 | 3235 |
| Viscosity index | 259 | 124 |
| Acid Value, mg KOH/g | 1.00 | 0.26 |
| Flash Point, °C | 146 | 238 |
| Fire Point, °C | 149 | 271 |
| Pour Point, °C | -59 | -73 |
| Foam Test, D-892, Seq I, ml | 35 | nil |
| Rust Test, D-665A | Pass | Pass |
| Four Ball Wear Test^{c} mm | 0.31 | 0.32 |
| Biodegradability, %^{d} | <50 | >90 |

| Pin & Vee Block Wear Test^{e} | | |
|---|---|---|
| Wear, teeth | 12 | 14 |
| Wear, mg | 6.2 | 5.9 |

| Oxidation and Corrosion Test^{f} | | |
|---|---|---|
| ΔAcid Value, mg KOH/g | 19.9 | 0.15 |
| %Δ Viscosity, 40°C | 34.6 | 4.1 |
| %Δ Viscosity, 100°C | 7.4 | 3.0 |
| Sludge, mg | Unfilterable | 1.8 |
| Copper, Δmq/cm2 | -1.384 | -0.615 |
| Steel 1, " | 0.015 | 0 |
| Steel 2, " | 0.031 | 0 |
| Steel 3, " | 0.023 | 0 |

| Seal Compatibility^{g} | | |
|---|---|---|
| Hardness | similar | similar |
| Spew | similar | similar |

| Thermogravimetric Analysis^{h} | | |
|---|---|---|
| °C @ 5% Loss | 124 | 214 |
| °C @ 10% Loss | 138 | 230 |
| °C @ 50% Loss | 182 | 275 |
| °C @ 90% Loss | 208 | 298 |

| | | |
|---|---|---|
| a BF= Brookfield Viscosity; 16 hr soak | | |
| b 16 hr soak @ -40°C, 3 days @ 25°C, 16 hr soak @ -40°C | | |
| c 20 kg, 1800 RPM, 54°C, 1 hr | | |
| d CEC L-33-A-94 Primary Biodegradation Test | | |
| e 200 lbs, 4 hrs | | |
| f 149°C, 5 liters air/hr, 7 days | | |
| g 100°C, 7 days, | | |
| h 10°C/min, Nitrogen sweep, 14 mg sample | | |
| 1- SUNFIL® DM 4463; a trademark product of Sun Chemical | | |

## Claims

1. A shock absorber (2) comprising a cylinder defining a chamber therein, the cylinder containing a fluid (12); a piston rod (14) sealingly projecting into the cylinder and being axially displaceable with respect to the cylinder; a piston (8) being attached to the piston rod, the piston being slidably disposed within the cylinder to sealingly divide the cylinder into first and second chambers (24, 26); means for permitting fluid communication between the first and second chambers (10); the means for permitting fluid communication being disposed in at least a portion of the piston; **characterized in that** said fluid is comprised of a polyol ester the polyol component of which is a hindered polyol and the carboxylic acid component is a mono-carboxylic acid having from about 5 to about 18 carbons atoms.

2. The shock absorber according to claim 1, wherein the hindered polyol is selected from the group consisting of trimethylolpropane, pentaerythritol, dipentaerythritol and neo-pentyl glycol.

3. The shock absorber of claim 1 wherein said polyol is trimethylolpropane.

4. The shock absorber according to any of claims 1 to 3, wherein said monocarboylic acid has from 5 to 10 carbon atoms.

5. The shock absorber according to any of claims 1 to 4, wherein said monocarboylic acid is a branched acid.

6. The shock absorber according to claim 1, wherein the polyol ester is an ester of trimethylolpropane and a mixture of carboxylic acids having from 5 to 9 carbon atoms.

## Patentansprüche

1. Stoßdämpfer (2), umfassend einen darin eine Kammer definierenden Zylinder, der eine Flüssigkeit (12) enthält; eine Kolbenstange (14), die abdichtend in den Zylinder hineinragt und gegenüber dem Zylinder axial verschieblich ist; einen an der Kolbenstange angebrachten Kolben (8), der im Zylinder gleitend angeordnet ist und dadurch den Zylinder abdichtend in eine erste und eine zweite Kammer (24, 26) unterteilt; ein Mittel zur Ermöglichung von Fluidverbindung zwischen der ersten und der zweiten Kammer (10), das in mindestens einem Teil des Kolbens angeordnet ist; **dadurch gekennzeichnet, daß** die Flüssigkeit aus einem Polyester mit einem gehinderten Polyol als Polyolkomponente und einer Monocarbonsäure mit etwa 5 bis etwa 18 Kohlenstoffatomen als Carbonsäurekomponente besteht.

2. Stoßdämpfer nach Anspruch 1, bei dem das gehinderte Polyol aus der Gruppe bestehend aus Trimethylolpropan, Pentaerythrit, Dipentaerythrit und Neopentylglykol stammt.

3. Stoßdämpfer nach Anspruch 1, bei dem es sich bei dem gehinderten Polyol um Trimethylolpropan handelt.

4. Stoßdämpfer nach einem der Ansprüche 1 bis 3, bei dem die Monocarbonsäure 5 bis 10 Kohlenstoffatome aufweist.

5. Stoßdämpfer nach einem der Ansprüche 1 bis 4, bei dem die Monocarbonsäure verzweigt ist.

6. Stoßdämpfer nach Anspruch 1, bei dem es sich bei dem Polyolester um einen Ester von Trimethylolpropan und einem Gemisch von Carbonsäuren mit 5 bis 9 Kohlenstoffatomen handelt.

## Revendications

1. Dispositif absorbant les chocs (2) comprenant un cylindre qui définit une chambre à sa partie interne, le cylindre contenant un fluide (12) ; une tige de piston (14) pénétrant hermétiquement dans le cylindre et pouvant se déplacer axialement par rapport à celui-ci ; un piston (8) étant fixé à la tige de piston, le piston étant monté coulissant à l'intérieur du cylindre afin de le diviser hermétiquement en une première chambre et une seconde chambre (24, 26) ; des moyens (10) pour permettre une communication de fluide entre la première et la seconde chambre ; ces moyens étant disposés dans au moins une partie du piston ;
**caractérisé en ce que**
le fluide est constitué d'un ester de polyol dont le composant polyol est un polyol occulté et le composant acide carboxylique est un acide monocarboxylique ayant d'environ 5 à environ 18 atomes de carbone.

2. Dispositif absorbant les chocs selon la revendication 1,
**caractérisé en ce que**
le polyol occulté est choisi dans le groupe constitué par le triméthylolpropane, le pentaérythritol, le dipentaérythritol et le néopentylglycol.

3. Dispositif absorbant les chocs de la revendication 1,
**caractérisé en ce que**
le polyol est le triméthylolpropane.

4. Dispositif absorbant les chocs selon l'une quelconque des revendications 1 à 3,
**caractérisé en ce que**
l'acide monocarboxylique comporte de 5 à 10 atomes de carbone.

5. Dispositif absorbant les chocs selon l'une quelconque des revendications 1 à 4,
**caractérisé en ce que**
l'acide monocarboxylique est un acide ramifié.

6. Dispositif absorbant les chocs selon la revendication 1,
**caractérisé en ce que**
l'ester de polyol est un ester de triméthylolpropane et d'un mélange d'acides carboxyliques ayant de 5 à 9 atomes de carbone.
